# EUROPÄISCHE PATENTSCHRIFT

(11) **EP 2 683 608 B1**
(45) Veröffentlichungstag und Bekanntmachung des Hinweises auf die Patenterteilung: **20.12.2017**
(21) Anmeldenummer: 12708673.4
(22) Anmeldetag: 03.03.2012
(51) Int. Cl.: B64C 33/00

(54) **SCHLAGFLÜGELEINRICHTUNG UND VERFAHREN ZUM BETREIBEN EINER SCHLAGFÜGELEINRICHTUNG**
FLAPPING WING DEVICE AND METHOD FOR OPERATING A FLAPPING WING DEVICE
DISPOSITIF À AILE BATTANTE ET PROCÉDÉ PERMETTANT DE FAIRE FONCTIONNER UN DISPOSITIF À AILE BATTANTE

(30) Priorität: 11.03.2011 DE 102011013704
(43) Veröffentlichungstag der Anmeldung: 15.01.2014
(73) Patentinhaber: Festo AG & Co. KG, 73734 Esslingen (DE)
(72) Erfinder: SEND, Wolfgang, 37085 Göttingen (DE); MUGRAUER, Rainer, 72124 Pliezhausen (DE); JEBENS, Kristof, 71116 Gärtringen (DE); JEBENS, Agalya, 71116 Gärtringen (DE)
(74) Vertreter: Patentanwälte Magenbauer & Kollegen Partnerschaft mbB
(86) Internationale Anmeldenummer: PCT/EP2012/000965
(87) Internationale Veröffentlichungsnummer: WO 2012/123074

(56) Entgegenhaltungen:
- WO-A2-2008/125868
- GB-A- 289 829
- GB-A- 2 209 727
- US-A- 1 726 342

## Beschreibung

Die Erfindung betrifft eine Schlagflügeleinrichtung mit einem Grundkörper, einer Antriebseinrichtung und einem Schlagflügel, wobei der Schlagflügel einen ersten und einen zweiten Flügelabschnitt sowie eine Gelenkeinrichtung zwischen dem ersten und dem zweiten Flügelabschnitt umfasst, wobei der erste Flügelabschnitt ein Gelenkmittel für eine schwenkbewegliche Lagerung am Grundkörper aufweist und wobei die Antriebseinrichtung für die Einleitung einer Relativbewegung zwischen Grundkörper und Schlagflügel ausgebildet ist, wobei eine Gelenkachse des Gelenkmittels und eine Schwenkachse der Gelenkeinrichtung zumindest nahezu parallel zueinander ausgerichtet sind, wobei der erste Flügelabschnitt eine formstabile erste Tragstrebe umfasst, die benachbart zu einer ersten Erstreckungsachse angeordnet ist, die sich zwischen dem Gelenkmittel und der Gelenkeinrichtung erstreckt und an der quer zur Erstreckungsachse ausgerichtete Stützelemente angeordnet sind, wobei der zweite Flügelabschnitt eine formstabile zweite Tragstrebe umfasst, die ausgehend von der Gelenkeinrichtung längs einer zweiten Erstreckungsachse ausgebildet ist und an der quer zur zweiten Erstreckungsachse ausgerichtete Stützelemente angeordnet sind, wobei die Stützelemente schwenkbeweglich an der Tragstrebe angeordnet sind. Ferner betrifft die Erfindung ein Verfahren zum Betreiben einer Schlagflügeleinrichtung.

Aus der DE 41 25 974 A1 ist ein Schwingflügler-Antrieb bekannt, der zwei Flügel umfasst, die beidseitig an einem Hauptmotor angeordnet sind, der einen Kurbelantrieb umfasst, um die Drehbewegung des Hauptmotors in eine Translationsbewegung umzusetzen. Zur Verbesserung des Wirkungsgrads des bekannten Schwingflügler-Antriebs ist es vorgesehen, die Flügel jeweils in Flügelteile zu unterteilen, die unabhängig voneinander verdreht werden können. Hierzu sind in den Flügeln Gelenke vorgesehen und Servomotoren eingebaut, so dass die Flügel bei einem Abwärtsschlag derart verdreht werden können, dass die hinteren Flügelkanten schräg nach oben weisen und bei einem Aufwärtsschlag schräg nach unten weisen. Dementsprechend sind die Flügelteile jeweils um Achsen verdrehbar, die senkrecht zur Drehachse des Hauptmotors und zur Vortriebsrichtung des Schwingflügler-Antriebs ausgerichtet sind.

Aus der WO 2008/125868 A2 ist ein Fluggerät mit einer mehrteiligen Flügelstruktur bekannt, die in unterschiedliche Stellungen mit unterschiedlichen aerodynamischen Eigenschaften gebracht werden kann. Dazu umfasst die Flügelstruktur mehrere, gelenkig miteinander verbundene Holme, die ein Anziehen und Ausstrecken der Flügelstruktur und damit eine Veränderung der Flügelspannweite ermöglichen. Dabei sind Gelenkachsen der Gelenke, mit denen die Holme miteinander verbunden sind, parallel zueinander ausgerichtet. An Rückseiten der Holme sind ferner Flügelelmente schwenkbeweglich angebracht, die unabhängig von der Schwenkstellung der Holme stets parallel zu einer Längsachse eines Flugzeugrumpfs ausgerichtet sind.

Aus der GB 2 209 727 A ist ein Ornithopter bekannt, bei dem ein Pilot, der sich zur Bedienung des Ornithopters mit einem Gurtzeug mit dem Ornithopter verbinden kann, mit Hilfe zweier Betätigungshebel Schwenkbewegungen auf mehrteilig ausgebildete Flügel einleiten kann, wobei im Zuge der Schwenkbewegungen durch die Wechselwirkung von Getriebeelementen und Zug- bzw. Druckstangen in den Flügeln auch eine Verwindung der Flügel und eine Spannweitenveränderung der Flügel bewirkt werden kann.Die Aufgabe der Erfindung besteht darin, eine Schlagflügeleinrichtung sowie ein Verfahren zum Betreiben einer Schlagflügeleinrichtung mit einem verbesserten Wirkungsgrad bereitzustellen.

Diese Aufgabe wird gemäß einem ersten Erfindungsaspekt für eine Schlagflügeleinrichtung der eingangs genannten Art mit den Merkmalen des Anspruchs 1 gelöst.

Hierbei ist vorgesehen, dass dem ersten und/oder dem zweiten Flügelabschnitt ein Stellmittel für eine Einleitung einer Schwenkbewegung der Stützelemente um eine konzentrisch zur Tragstrebe angeordnete Schwenkachse relativ zur Tragstrebe zugeordnet ist.

Durch die Ausrichtung der Gelenkachse und der Schwenkachse kann der Schlagflügel abgeknickt werden. Dadurch wird während einer Aufschlagphase des Schlagflügels, in der der Schlagflügel aus einer unteren Umkehrposition in eine obere Umkehrposition gebracht werden soll, eine möglichst geringe aerodynamische Querkraft in vertikaler Richtung erzielt. Demgegenüber wird bei einer Abschlagbewegung des Schlagflügels, eine möglichst große aerodynamische Reaktionskraft erzeugt, deren Komponenten die vertikal nach oben gerichtete Auftriebskraft und die horizontal gerichtete Vortriebskraft darstellen. Dies wird dadurch erreicht, dass die beiden Flügelabschnitte des Schlagflügels eine gestreckte Stellung zueinander einnehmen, in der eine Projektionsfläche auf eine Horizontalebene maximal ist. Vorzugsweise entspricht die gestreckte Stellung des Schlagflügels einer Endposition eines Bewegungsbereichs für die Schwenkbewegung zwischen erstem und zweitem Flügelabschnitt. Durch die Abknickmöglichkeit mittels der Gelenkeinrichtung kann ein aerodynamisches Verhalten des Schlagflügels erzielt werden, das dem aerodynamischen Verhalten eines Vogelflügels deutlich näher kommt, als dies beim bisher bekannten Stand der Technik der Fall war.

Dabei umfasst der erste Flügelabschnitt eine formstabile erste Tragstrebe, die benachbart, insbesondere parallel, zu einer ersten Erstreckungsachse angeordnet ist, die sich zwischen dem Gelenkmittel und der Gelenkeinrichtung erstreckt, wobei an der Tragstrebe quer zur Erstreckungsachse ausgerichtete Stützelemente angeordnet sind. Durch die Kombination einer Tragstrebe und daran angebrachter Stützelemente lässt sich eine besonders leichte und stabile Aufbauweise für den Flügelabschnitt erzielen, die auch als Spantenbauweise bezeichnet wird. Hierbei ist zwischen den Stützelementen Raum für technische Einrichtungen wie beispielsweise Aktoren und/oder Sensoren, die für einen effektiven Betrieb des Schlagflügels genutzt werden können. In gleicher Weise ist auch der zweite Flügelabschnitt aufgebaut.

Ferner sind die Stützelemente verschwenkbar an der Tragstrebe angeordnet sind.

Durch die bewegliche Anordnung der Stützelemente an der Tragstrebe lässt sich während der Bewegung des Schlagflügels zwischen der oberen und der unteren Umkehrposition eine aerodynamisch günstige Ausrichtung des von den Stützelementen bestimmten aerodynamischen Profils des Schlagflügels erreichen. Die verschwenkbare Lagerung der Stützelemente an der Tragstrebe ermöglicht eine Verwindung des Flügels um die Tragstrebe. Diese Verwindung wird durch entsprechende Stellmittel gezielt beeinflusst, um während der Auf- und/oder der Abschlagphase oder in aufeinanderfolgenden Auf- und/oder Abschlagphasen unterschiedliche aerodynamische Eigenschaften des Schlagflügels einstellen zu können.

Dabei ist dem ersten und/oder dem zweiten Flügelabschnitt ein Stellmittel für eine Einleitung einer Bewegung der Stützelemente, insbesondere einer Schwenkbewegung um eine konzentrisch zur Tragstrebe angeordnete Schwenkachse, relativ zur Tragstrebe zugeordnet. Mit Hilfe des Stellmittels, bei dem es sich exemplarisch um einen elektrischen Getriebemotor, einen elektrischen Linearsteller oder eine pneumatische Translations- beziehungsweise Rotationseinrichtung handeln kann, wird die Schwenkbewegung der Stützelemente um die Schwenkachse selektiv eingeleitet. Besonders bevorzugt ist vorgesehen, dass das Stellmittel in einem außen liegenden Endabschnitt des zweiten Flügelabschnitts angeordnet ist, um dort die größte Auslenkung der Stützelemente zu bewirken. Von dort ausgehend kann sich diese Auslenkung über die Verbindungsmittel in abgeschwächter Weise in Richtung des ersten Flügelabschnitts fortpflanzen.

Dabei ist vorgesehen, dass die Stützelemente an der Tragstrebe des ersten und/oder des zweiten Flügelabschnitts jeweils schwenkbar um eine parallel, insbesondere konzentrisch, zur jeweiligen Tragstrebe verlaufende Schwenkachse angeordnet sind. Hierdurch können die Stützelemente und somit die von den Stützelementen bestimmte Außengeometrie des Schlagflügels in Abhängigkeit vom Bewegungszustand des Schlagflügels eingestellt werden. Vorteilhaft ist es, wenn die Stützelemente derart ausgebildet sind, dass eine Relativbewegung zwischen Stützelement und Tragstrebe begrenzt ist. Dies kann beispielsweise durch eine entsprechende Profilierung der Tragstrebe und des hieran aufgenommenen Stützelements erreicht werden, insbesondere um eine Ausschlagbegrenzung der Schwenkbewegung zu erzielen.

Zweckmäßig ist es, wenn das Stellmittel für eine Einleitung einer Schwenkbewegung auf wenigstens ein Stützelement ausgebildet ist, das an einem der Gelenkeinrichtung abgewandten Endbereich des zweiten Flügelabschnitts angeordnet ist. Hierdurch wird erreicht, dass eines der am weitesten außen liegenden Stützelemente, insbesondere das am weitesten außen liegende Stützelement, mit dem größten Ausschlag der Schwenkbewegung beaufschlagt wird. Die benachbart zu diesem Stützelement angeordneten Stützelemente, insbesondere die weiter innen am Schlagflügel angeordneten Stützelemente, werden aufgrund der elastischen Kopplung zwischen den Stützelementen mit Schwenkbewegungen beaufschlagt, die mit zunehmendem Abstand von Stützelement, das direkt mit dem Stellmittel gekoppelt ist, ebenfalls abnehmen. Dadurch kann erreicht werden, dass ein Verhältnis zwischen einer Auslenkung des jeweiligen Stützelements in vertikaler Richtung während der Auf- und/oder Abschlagbewegung und einer Verschwenkung des jeweiligen Stützelements für sämtliche Stützelemente längs des Schlagflügels zumindest im Wesentlichen konstant ist. Hierdurch wird ein vorteilhaftes aerodynamisches Verhalten des Schlagflügels erreicht.

Bei einer vorteilhaften Weiterbildung der Erfindung ist vorgesehen, dass der erste Flügelabschnitt eine, vorzugsweise parallel zur Tragstrebe des ersten Flügelabschnitts verlaufende, Steuerstrebe umfasst, die relativbeweglich mit der ersten Tragstrebe gekoppelt ist. Vorzugsweise ist die Steuerstrebe für eine Anlenkung des zweiten Flügelabschnitts vorgesehen, damit dieser die gewünschte Relativbewegung, insbesondere Abknickung, gegenüber dem ersten Flügelabschnitt vornehmen kann.

Alternativ kann die Steuerstrebe durch einen rotatorischen oder translatorischen Antrieb, insbesondere einen elektrischen Getriebemotor, ersetzt werden, der an der ersten oder zweiten Tragstrebe angeordnet ist. Ein derartiger Antrieb ist zur Einwirkung auf die jeweils andere Tragstrebe ausgebildet, um die gewünschte Abknickung des zweiten Flügelabschnitts gegenüber dem ersten Flügelabschnitt zu bewirken.

Bevorzugt umfasst die Gelenkeinrichtung zwischen dem ersten und dem zweiten Flügelabschnitt mehrere, räumlich verteilt angeordnete Schwenkgelenke, die an einander benachbarten Endbereichen der ersten Tragstrebe, der Steuerstrebe und der zweiten Tragstrebe ausgebildet sind. Durch die räumliche Verteilung der Schwenkgelenke für die Gelenkeinrichtung kann eine Schwenkbewegung des zweiten Flügelabschnitts gegenüber dem ersten Flügelabschnitt mit einer ortfesten, realen oder verschieblichen, virtuellen Schwenkachse erzielt werden. Hierdurch kann beispielsweise eine Schwenkbewegung zwischen dem ersten und dem zweiten Flügelabschnitt erreicht werden, die in vorteilhafter Weise auf die mechanische Aufbauweise des Schwenkflügels abgestimmt ist.

Vorteilhaft ist es, dass zwischen dem Schwenkgelenk der ersten Tragstrebe und dem Schwenkgelenk der Steuerstrebe ein Lenkhebel angeordnet ist. Dieser Lenkhebel stellt eine eindeutig definierte kinematische Kopplung zwischen den beiden Schwenkgelenken an der Tragstrebe und an der Steuerstrebe sicher. Vorzugsweise ist der Lenkhebel starr ausgebildet. Bei einer alternativen Ausführungsform der Erfindung kann der Lenkhebel elastisch und/oder längeneinstellbar ausgebildet sein.

Bei einer vorteilhaften Weiterbildung der Erfindung ist vorgesehen, dass die erste Tragstrebe und die Steuerstrebe jeweils an einem der Gelenkeinrichtung abgewandten Endbereich mittels eines Lenkhebels schwenkbeweglich miteinander gekoppelt sind. Die Aufgabe dieses Lenkhebels besteht darin, eine Einleitung einer Relativbewegung zwischen die Tragstrebe und die Steuerstrebe zu ermöglichen. Mit Hilfe dieser Relativbewegung kann beispielsweise die gewünschte Abknickung des zweiten Flügelabschnitts gegenüber dem ersten Flügelabschnitt erreicht werden.

Vorteilhaft ist es, wenn die Antriebseinrichtung einen Drehantrieb umfasst, der für eine Einleitung einer Drehbewegung auf eine Kurbel ausgebildet ist, die mit dem Lenkhebel bewegungsgekoppelt ist, der zwischen der ersten Tragstrebe und der Steuerstrebe angeordnet ist. Bei dem Drehantrieb handelt es sich exemplarisch um einen Elektromotor, insbesondere einen bürstenlosen, elektrisch kommutierten Gleichstrommotor. Der Drehantrieb kann je nach Auslegung unmittelbar auf eine Kurbel einwirken oder über eine Getriebeeinrichtung mit der Kurbel bewegungsgekoppelt sein. Die Aufgabe der Kurbel besteht darin, die Rotationsbewegung des Drehantriebs in Zusammenwirkung mit dem Lenkhebel, der zwischen der ersten Tragstrebe und der Steuerstrebe angeordnet ist, in die gewünschte Schlagbewegung des Schlagflügels umzusetzen. Bei der Schlagbewegung tritt eine Überlagerung zweier Schwenkbewegungen auf. Die erste Schwenkbewegung wird in die Auf- und Abschlagbewegung des Schlagflügels umgesetzt. Die zweite Schwenkbewegung wird in die relative Verschwenkung des zweiten Flügelabschnitts gegenüber dem ersten Flügelabschnitt umgesetzt. Dementsprechend ist ein Kurbelzapfen zur beweglichen Verbindung der Kurbel mit dem Lenkhebel, der zwischen der ersten Tragstrebe und der Steuerstrebe angeordnet ist, vorgesehen. Dieser Kurbelzapfen bewegt sich auf einer von der Kurbel bestimmten Kreisbahn und ist für eine Bereitstellung der beiden zueinander senkrecht ausgerichteten Bewegungskomponenten vorgesehen, die die Schlagbewegung sowie die Abwinklung der Flügelabschnitte bewirken. Der Kurbelzapfen ist dabei in radialer Richtung beabstandet zu einer Drehachse der Kurbel angeordnet.

Bevorzugt ist vorgesehen, dass zwischen der Tragstrebe und den Stützelementen eine Rückstellfeder ausgebildet ist. Die Aufgabe der Rückstellfeder besteht darin, eine Vorzugsstellung für die Stützelemente gegenüber der Tragstrebe vorzugeben, die ohne Einfluss äußerer Kräfte zuverlässig eingenommen wird. Vorteilhaft ist es, wenn es sich bei der Rückstellfeder um eine Torsionsfeder handelt, die parallel, vorzugsweise konzentrisch, zur Tragstrebe angeordnet ist. Alternativ kann als Rückstellfeder auch ein Biegestab vorgesehen werden. Besonders vorteilhaft ist es, wenn mehrere der Stützelemente an einer gemeinsamen Rückstellfeder angeordnet sind, so dass sich bei gleichen Kräften auf die Stützelemente in Abhängigkeit von einem Befestigungspunkt für die Rückstellfeder unterschiedliche Auslenkungen für die einzelnen Stützelemente ergeben.

Bei einer vorteilhaften Weiterbildung der Erfindung ist vorgesehen, dass einander benachbarte Stützelemente am ersten und/oder am zweiten Flügelabschnitt über, vorzugsweise elastisch ausgebildete, Verbindungsmittel miteinander bewegungsgekoppelt sind. Die Verbindungsmittel dienen dazu, eine möglichst homogene und stetige Deformation des Profils der jeweiligen Flügelabschnitte zu ermöglichen. Bei den Verbindungsmitteln kann es sich beispielsweise um biegeschlaffe Seilabschnitte oder biegeelastische Federdrähte handeln, die zumindest zwischen jeweils zwei benachbarten Stützelementen angeordnet sind. Besonders bevorzugt ist es, wenn die Verbindungsmittel gleichzeitig als Rückstellfeder zwischen den Stützelementen wirken.

Zweckmäßig ist es, wenn das Gelenkmittel an der Tragstrebe des ersten Flügelabschnitts angeordnet ist. Da der Tragstrebe die Aufgabe zukommt, die auf den Flügelabschnitt einwirkenden Kräfte in den Grundkörper abzuleiten, weist diese eine stabile Konstruktion auf und ist daher prädestiniert, die bei den Schlagbewegungen des Schlagflügels auftretenden Kräfte in den Grundkörper einzuleiten.

Diese Aufgabe wird gemäß einem zweiten Erfindungsaspekt für ein Verfahren zum Betreiben einer Schlagflügeleinrichtung mit den Merkmalen des Anspruchs 15 gelöst. Hierbei ist ein Verfahren zum Betreiben einer Schlagflügeleinrichtung mit den nachfolgend beschriebenen Schritten vorgesehen: Erfassen einer räumlichen Lage eines Schlagflügels gegenüber einem Grundkörper, insbesondere einer räumlichen Lages eines ersten Flügelabschnitts und/oder eines zweiten Flügelabschnitts gegenüber dem Grundkörper, Einleiten einer Schwenkbewegung auf wenigstens ein schwenkbeweglich an einer Tragstrebe gelagertes Stützelement um eine konzentrisch zur Tragstrebe angeordnete Schwenkachse in Abhängigkeit von der ermittelten räumlichen Lage des Schlagflügels, um eine Verwindung des Schlagflügels zu erzielen. Mit diesem Verfahren soll eine möglichst hohe aerodynamische Effizienz des Schlagflügels erreicht werden. Hierzu ist vorgesehen, dass die Verwindung des Schlagflügels in einer vorgebbaren Korrelation zu der Schlagbewegung des Schlagflügels steht. Diese Korrelation kann bei einer Verwendung der Schlagflügeleinrichtung unter stationären Randbedingungen fest vorgegeben sein. Bei einer Verwendung der Schlagflügeleinrichtung unter dynamisch veränderlichen Randbedingungen, insbesondere bei Einsatz der Schlagflügeleinrichtung zur Auftriebs- und/oder Vortriebserzeugung in einem Fluggerät, kann eine Berücksichtigung von dynamisch veränderlichen Randbedingungen wie Fluglage, Fluggeschwindigkeit, aktuelle Flugrichtung, angestrebte Flugrichtung, Steig- oder Sinkgeschwindigkeit, Luftdruck etc. mit in eine Vorgabe für die Verwindung des jeweiligen Schlagflügels vorgesehen werden.

Eine vorteilhafte Ausführungsform der Erfindung ist in der Zeichnung dargestellt. Hierbei zeigen:
- Figur 1: eine Vorderansicht einer Schlagflügeleinrichtung in einer schematischen Darstellung,
- Figur 2: eine Schnittdarstellung des Schlagflügels entlang der Linie A-A und
- Figur 3: eine Schnittdarstellung des Schlagflügels entlang der Schnittlinie B-B.

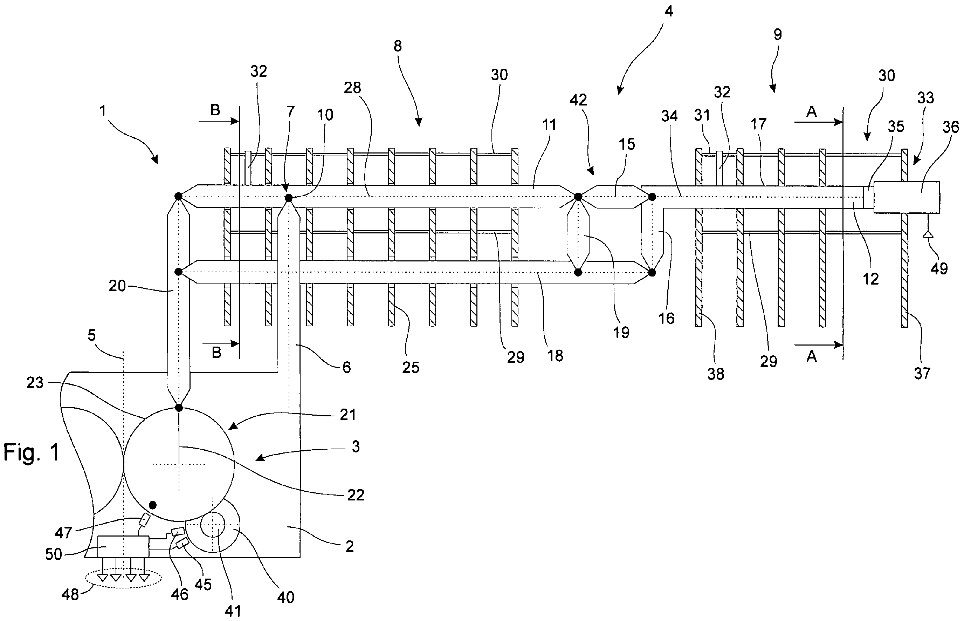

Eine Schlagflügeleinrichtung 1, die in der Figur 1 in schematischer, nicht maßstäblicher Darstellung gezeigt ist, umfasst einen exemplarisch Grundkörper 2, eine Antriebseinrichtung 3 und zwei Schlagflügel 4, von denen aus Gründen der Übersichtlichkeit nur einer dargestellt ist. Vorzugsweise sind die beiden Schlagflügel 4 symmetrisch zu einer Spiegelachse 5 angeordnet.

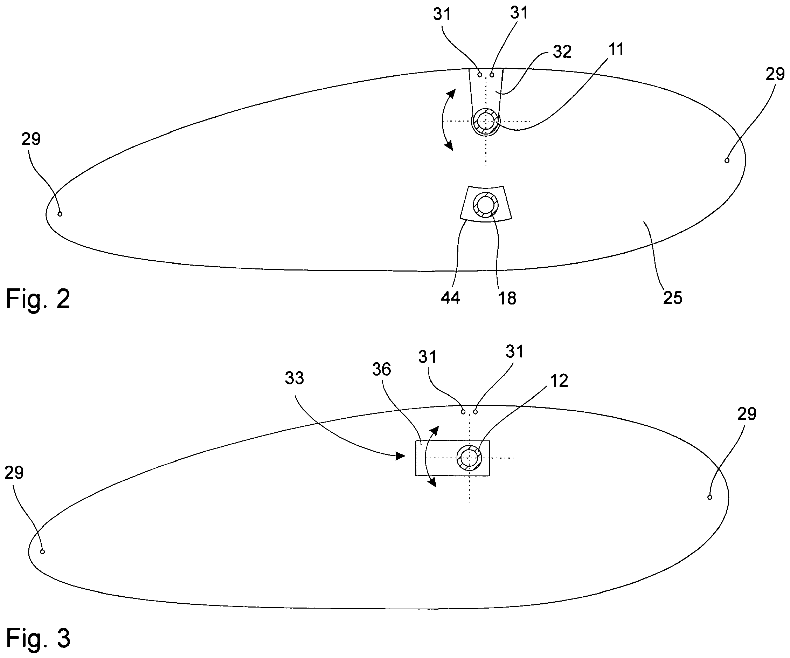

Der Grundkörper 2 kann ein Teil eines nicht näher dargestellten Rumpfs eines Fluggeräts sein. Vorzugsweise erstreckt sich dieser Rumpf längs einer Achse, die senkrecht zur Darstellungsebene der Figur 2 ausgerichtet ist. Bevorzugt ist der Grundkörper 2 ein Spant innerhalb eines aus mehreren, längs der Achse normal zur Darstellungsebene der Figur 1, angeordneten Spanten gebildeten Rumpfs. An dem Grundkörper 2 sind zwei vorzugsweise symmetrisch zur Spiegelachse 5 ausgerichtete Lagerarme 6 angebracht, von denen in der Figur 1 nur einer dargestellt ist. An dem Lagerarm 6 ist ein Gelenkmittel 7 endseitig angeordnet, das für eine schwenkbewegliche Lagerung eines ersten Flügelabschnitts 8 sowie eines daran befestigten zweiten Flügelabschnitts 9 am Grundkörper 2 vorgesehen ist.

Das Gelenkmittel 7 ist exemplarisch als Kombination eines Bolzens 10, der endseitig an dem Lagerarm 6 angebracht ist, und einer in der Figur 1 nicht dargestellten Ausnehmung in einer ersten Tragstrebe 11 des ersten Flügelabschnitts 8 verwirklicht. Bei einer nicht dargestellten Ausführungsform der Erfindung kann das Gelenkmittel auch als Festkörpergelenk, insbesondere als Filmscharnier, ausgebildet sein.

Die erste Tragstrebe 11 ist über einen Lenkhebel 15 schwenkbeweglich mit einer zweiten Tragstrebe 12 gekoppelt. Exemplarisch ist die erste Tragstrebe 11 geradlinig ausgebildet, während die zweite Tragstrebe 12 L-förmig abgewinkelt ausgebildet ist. Bei einer nicht dargestellten Ausführungsform der Erfindung können sowohl die erste als auch die zweite Tragstrebe jeweils gekrümmt ausgebildet sein und/oder ein von 90° abweichender Winkel zwischen dem kurzen und dem langen Schenkel der zweiten Tragstrebe vorgesehen sein.

Der kurze Schenkel 16 der zweiten Tragstrebe 12 ist in einem Endbereich gelenkig mit einer Steuerstrebe 18 verbunden, die sich exemplarisch parallel zur ersten Tragstrebe 11 erstreckt. Ein zweiter Lenkhebel 19 ist gelenkig an der Steuerstrebe 18 und an der gelenkigen Verbindung zwischen erstem Lenkhebel 15 und erster Tragstrebe 11 angebracht. Die Steuerstrebe 18 ist an einem dem zweiten Lenkhebel 19 abgewandten Endbereich gelenkig mit einer Pleuelstange 20 verbunden, die mit der Antriebseinrichtung 3 sowie mit der ersten Tragstrebe 11 schwenkbeweglich gekoppelt ist.

Die Antriebseinrichtung 3 umfasst einen Kurbelzapfen 21, der schwenkbeweglich mit der Pleuelstange 20 verbunden ist und radial außen liegend an einer Kurbel 22 angebracht ist. Die Kurbel 22 ist einem Antriebszahnrad 23 zugeordnet, das seinerseits von einem exemplarisch als Gleichstrommotor ausgebildeten Antriebsmotor 24 in eine Drehbewegung versetzt werden kann. An einem dem Kurbelzapfen 21 abgewandten Ende ist die Pleuelstange 20 schwenkbeweglich mit dem Endbereich der ersten Tragstrebe 11 verbunden.

Somit bilden die erste Tragstrebe 11, die zweite Tragstrebe 12, der erste Lenkhebel 15, der zweite Lenkhebel 19, die Steuerstrebe 18, die Pleuelstange 20 und die Kurbel 22 ein Kurbelgetriebe. Dieses Kurbelgetriebe ermöglicht ausgehend von einer Rotationsbewegung des Antriebsmotors eine Schwenkbewegung des ersten Flügelabschnitts um eine senkrecht zur Darstellungsebene der Figur 1 ausgerichtete, nicht näher dargestellte Gelenkachse des Gelenkmittels 7 sowie eine Abknickbewegung zwischen dem ersten Flügelabschnitt 8 und dem zweiten Flügelabschnitt 9 um eine ebenfalls orthogonal zur Darstellungsebene der Figur 1 ausgerichtete Schwenkachse.

Die ebenfalls nicht dargestellte Gelenkachse des Gelenks, das im Wesentlichen durch die schwenkbewegliche Verbindung zwischen der zweiten Tragstrebe 12 und der Steuerstrebe 18 ausgebildet wird, verläuft ebenfalls normal zur Darstellungsebene der Figur 1.

Sowohl der erste Flügelabschnitt 8 als auch der zweite Flügelabschnitt 9 sind jeweils mit mehreren beabstandet zueinander angeordneten, rippenförmig ausgebildeten Stützelementen 25, 37 versehen, die in den Figuren 2 und 3 näher dargestellt sind.

Am ersten Flügelabschnitt 8 umfassen die Stützelemente 25 sowohl die erste Tragstrebe 11 als auch die Steuerstrebe 18. Vorzugsweise ist vorgesehen, dass die Stützelemente 25 um eine erste Erstreckungsachse 28, die sich längs der ersten Tragstrebe 11 erstreckt, drehbeweglich gelagert sind. Dementsprechend können die Stützelemente 25 gegenüber der Steuerstrebe 18 eine Kreisbewegung vollziehen. Um eine koordinierte Rotationsbewegung der Stützelemente 25 am ersten Flügelabschnitt 8 zu bewirken, sind die Stützelemente 25 über wenigstens einen, im Wesentlichen parallel zur ersten Tragstrebe 11 verlaufenden, flexiblen Verbindungsstab 29 elastisch miteinander gekoppelt. Um eine Ausrichtung der Stützelemente 25 in einer Vorzugsstellung gegenüber der ersten Tragstrebe 11 zu gewährleisten, ist zwischen der ersten Tragstrebe 11 und den Stützelementen 25 eine Rückstellfeder 30 ausgebildet. Exemplarisch umfasst die Rückstellfeder 30 wenigstens zwei Federstäbe 31, die an einer fest mit der ersten Tragstrebe 11 verbundenen Lagerplatte 32 eingespannt sind und die vorzugsweise im Wesentlichen parallel zur ersten Tragestrebe 11 ausgerichtet sind.

Bei einer schwenkbeweglichen Auslenkung der Stützelemente 25 um die erste Erstreckungsachse 28 werden die Federstäbe 31 auf Biegung beansprucht und üben damit eine Rückstellkraft auf die jeweils zugeordneten Stützelemente 25 aus. Hierdurch kann gewährleistet werden, dass die Stützelemente im kraftfreien Zustand in einer Vorzugsstellung gegenüber der ersten Tragstrebe 11 des ersten Flügelabschnitts 8 angeordnet sind.

In gleicher Weise sind am zweiten Flügelabschnitt 9 ebenfalls Stützelemente 37 sowie eine Rückstellfeder 30, die zwei Federstäbe 31 und eine Lagerplatte 33 umfasst, vorgesehen.

An einem dem ersten Flügelabschnitt 8 abgewandten Endbereich des zweiten Flügelabschnitts 9 ist ein exemplarisch als elektrischer Getriebemotor ausgebildetes Stellmittel 33 angeordnet. Das Stellmittel 33 ist für die Bereitstellung einer Rotationsbewegung um eine zweite Erstreckungsachse 34 der zweiten Tragstrebe 12 ausgebildet. Exemplarisch ist vorgesehen, dass eine Ausgangswelle 35 des Stellmittels 33 drehfest mit der zweiten Tragstrebe 12 verbunden ist. Ein Gehäusekörper 36 des Stellmittels 33, in dem exemplarisch ein nicht dargestellter Elektromotor sowie ein nicht näher dargestelltes Rädergetriebe aufgenommen sind, ist relativ zur zweiten Tragstrebe 12 verschwenkbar ausgebildet, wobei die Schwenkbewegung um die zweite Erstreckungsachse 34 vorgesehen ist. Dem Gehäusekörper 36 des Stellmittels 33 ist ein Stützelement 37 zugeordnet, das vorzugsweise fest mit dem Gehäusekörper 36 verbunden ist. Hierdurch führt eine Bewegung des Stellmittels 33 zu einer relativen Verdrehung des Stützelements 37 gegenüber der zweiten Tragstrebe 12. Da das Stützelement 37 mit den übrigen Stützelementen 38 des zweiten und sowie gegebenenfalls auch mit den Stützelementen 25 des ersten Flügelabschnitts bewegungsgekoppelt sein kann, findet eine Weiterleitung der Verdrehungsbewegung des Stellmittels 33 um die Erstreckungsachse 34 bis hin zum ersten Flügelabschnitt 8 und den daran angebrachten Stützelementen 25 statt. Die Weiterleitung der Verdrehungsbewegung oder Verwindung erfolgt insbesondere über Federstäbe 31 und Verbindungsstäbe 29 sowie gegebenenfalls über eine nicht näher dargestellte Außenbespannung der Stützelemente 25.

Durch geeignete Auswahl der Rückstellfedern 30 und der Verbindungsstäbe 29 kann der Grad der Bewegungskopplung zwischen dem Stellmittel 33 und den längs der Erstreckungsachsen 28, 34 angeordneten Stützelementen 25, 38 bedarfsgerecht eingestellt werden.

Die Antriebseinrichtung 3 umfasst einen schematisch dargestellten elektrischen Antriebsmotor 24, dessen Antriebsritzel 41 auf das Antriebszahnrad 23 wirkt. Exemplarisch sind symmetrisch zur Spiegelachse 5 zwei Antriebszahnräder 23 vorgesehen, die miteinander kämmen, so dass eine Rotationsbewegung des ersten Antriebszahnrads 23 in einer ersten Drehrichtung zu einer gegensinnigen Rotationsbewegung des zweiten Antriebszahnrads 23 führt. Die mit dem Kurbelzapfen 21 verbundene Pleuelstange 20 vollzieht während einer Umlaufbewegung der Kurbel 22 eine Bewegung, die aus der Überlagerung einer Translationsbewegung und einer Schwenkbewegung zusammengesetzt ist. Vorzugsweise werden die Antriebszahnräder 23 bei einem Ruhezustand der Schlagflügeleinrichtung 1, insbesondere der Antriebseinrichtung 3, in die in der Figur 1 dargestellte Position gebracht, da hierbei ein minimaler Luftwiderstand erzielt wird, der beispielsweise bei einem Einsatz der Schlagflügeleinrichtung 1 für ein Fluggerät einen Segelbetrieb mit hoher Gleitzahl ermöglicht.

Die Bewegung der Pleuelstange 20 wird auf die erste Tragstrebe 11 übertragen und führt dabei zu einer Schwenkbewegung der ersten Tragstrebe 11 um die orthogonal zur Darstellungsebene der Figur 1 ausgerichtete Gelenkachse des Gelenkmittels 7. Die Bewegung der Pleuelstange 20 wird auch auf die Steuerstrebe 18 übertragen und führt dadurch zu einer Überlagerung einer Schwenkbewegung und einer Translationsbewegung für die Steuerstrebe 18. Diese wird zum Einen synchron mit der ersten Tragstrebe 11 um die orthogonal zur Darstellungsebene der Figur 1 ausgerichtete Gelenkachse des Gelenkmittels 7 verschwenkt. Zum Anderen ruft die Bewegung der Pleuelstange 20 eine relative Verschiebung oder Translationsbewegung zwischen der ersten Tragstrebe 11 und der Steuerstrebe 18 hervor. Diese Translationsbewegung führt zu einer Verschwenkung der beiden Lenkhebel 15 und 19 und damit im Ergebnis zu einem Abklappen des kurzen Schenkels 16 der zweiten Tragstrebe 12. Je nach geometrischer Ausgestaltung der Länge des zweiten Lenkhebels 19 und des Abstandes der Gelenke von erster Tragstange 11 und Steuerstrebe 18 an der Pleuelstange 20 kann eine Bewegungsübersetzung oder Bewegungsuntersetzung für die translatorische Bewegungskomponente der Pleuelstange 20 gewählt werden.

Mittels der Pleuelstange 20, der Steuerstrebe 18 und der Gelenkeinrichtung 42 kann exemplarisch bei einer Aufwärtsbewegung des Schlagflügels 4, die gemäß der Darstellung der Figur 1 als Schwenkbewegung gegen den Uhrzeigersinn stattfindet, ein Abwinkeln des zweiten Flügelabschnitts 9 gegenüber dem ersten Flügelabschnitt 8 im Uhrzeigersinn hervorgerufen werden. Bei einer Abschlagbewegung, die gemäß der Figur 1 im Uhrzeigersinn stattfindet, erfolgt eine Schwenkbewegung des zweiten Flügelabschnitts 9 gegen den Uhrzeigersinn, um hierbei in die ausgestreckte Stellung, bei der die beiden Erstreckungsachsen 28 und 34 zumindest im Wesentlichen parallel ausgerichtet sind, wie dies in der Figur 1 dargestellt ist, zu gelangen.

Vorteilhaft für die Abklappbewegung des zweiten Flügelabschnitts 9 gegenüber dem ersten Flügelabschnitt 8 ist es, wenn die aus dem ersten Lenkhebel 15, dem zweiten Lenkhebel 19 sowie dem kurzen Schenkel 16 der zweiten Tragstrebe 12 gebildete Gelenkeinrichtung 42 als Gelenkviereck, insbesondere in Form eines Drachenvierecks, ausgebildet ist. Hierdurch kann in besonders effizienter Weise die Schwenkbewegung der Pleuelstange 20 in die gewünschte Abklappbewegung des zweiten Flügelabschnitts 9 gegenüber dem ersten Flügelabschnitt 8 umgesetzt werden. Zudem kann durch diese Gestaltung der Gelenkeinrichtung 42 eine effektive Bewegung des zweiten Flügelabschnitts 9, die durch eine Überlagerung der Auf- und Abschlagbewegung des ersten Flügelabschnitts 8 und die Verschwenkung des zweiten Flügelabschnitts 9 gegenüber dem ersten Flügelabschnitt 8 hervorgerufen wird, auf einer Kreisbahn erreicht werden. Durch diese kreisbahnförmige Bewegung des zweiten Flügelabschnitts 9 wird in den Umkehrpunkten der Bewegung eine sanfte Abbremsung und neuerliche Beschleunigung gewährleistet, so dass die Kräfte auf den zweiten Flügelabschnitt 9 gering gehalten sind und somit eine Leichtbaukonstruktion ermöglichen.

Aus der Darstellung der Figur 2 ist zu entnehmen, dass das Stützelement 25 drehbar an der ersten Tragstrebe 11 gelagert ist. Hierzu ist im Stützelement 25 exemplarisch eine kreisrunde Ausnehmung 43 vorgesehen, die von der ersten, vorzugsweise rohrförmig ausgebildeten Tragstrebe 11 durchsetzt wird. Um die Schwenkbeweglichkeit des Stützelements 25 um die erste Erstreckungsachse 28 zu gewährleisten, weist das Stützelement 25 zusätzlich eine exemplarisch kreisringsegmentförmige Ausnehmung 44 auf. Bevorzugt ist das Kreiszentrum der Ausnehmung 44 identisch mit der Erstreckungsachse 28 der Tragstrebe 11. Dem in der Figur 2 dargestellten Stützelement 25 ist die an der ersten Tragstrebe 11 befestigte Lagerplatte 32 für die Federstäbe 31 vorgelagert. An peripheren Endbereichen des Stützelements 25 sind senkrecht zur Darstellungsebene der Figur 2 verlaufende Verbindungsstäbe 29 vorgesehen.

In der Figur 3 ist das fest mit dem Stellmittel 33 verbundene Stützelement 37 dargestellt, das von den Federstäben 31 und den Verbindungsstäben 29 durchsetzt ist.

Mit Hilfe des Stellmittels 33 und der vorstehend bereits beschriebenen Bewegungskopplung der Stützelemente 25, 38 mit dem Stützelement 37 kann eine Verwindung des elastisch bespannten Schlagflügels 4 während der Auf- und Abschlagsphase in unterschiedliche Verwindungsrichtungen erzielt werden, um dadurch einen hohen aerodynamischen Wirkungsgrad sicherzustellen. Ein derartiger Schlagflügel 4 kann beispielsweise für den Einsatz an einem künstlichen Flugobjekt, beispielsweise einem künstlichen Vogel, vorgesehen sein. Durch die endseitige Anbringung des Stellmittels 33 wird in dem äußeren Bereich des Schlagflügels eine besonders große Auslenkung der Stützelemente 37, 38 hervorgerufen, die sich in Richtung des ersten Flügelabschnitts 8 durch die Wirkung der Federstäbe 31 und der elastischen Verbindungsstäbe 29 in reduzierter Form fortpflanzt. Durch die Einleitung der Schwenkbewegung an der Flügelspitze mit Hilfe des Stellmittels kann erreicht werden, dass ein Verhältnis zwischen einer vertikalen Auslenkung der jeweiligen Stützelemente 25, 38 und einer Verschwenkung dieser Stützelemente 25, 38 um die jeweils zugehörigen Erstreckungsachsen 28, 34 zumindest im Wesentlichen konstant ist. Dies ist für die aerodynamische Wirkung der Schlagflügeleinrichtung 1 vorteilhaft.

Für eine vorteilhafte Ansteuerung des Stellmittels 33 und der Antriebseinrichtung 3 ist eine Regelungseinheit 50 vorgesehen. Die Regelungseinheit 50, die beispielsweise als Mikroprozessor ausgebildet sein kann, ermittelt über Hall-Sensoren 45, 46 und 47 die rotatorische Lage des nicht näher dargestellten Läufers des Antriebs 24 sowie des Antriebszahnrads 23. Hierdurch kann beispielsweise festgestellt werden, wann sich der Schlagflügel in der gestreckten Position, wie sie in der Figur 1 dargestellt ist, befindet. Ausgehend von dieser Bestimmung kann nunmehr für die folgende Auf- und Abschlagbewegung des Schlagflügels 4 die Einstellung des Stellmittels 33 erfolgen. Hierzu sind an der Regelungseinheit 50 mehrere Ausgänge 48 vorgesehen, von denen einer in nicht dargestellter Weise, insbesondere über eine Kabelverbindung, mit einem am Stellmittel 33 ausgebildeten Eingang 49 verbunden ist. Weitere Ausgänge 48 an der Regelungseinheit 50 sind mit nicht näher dargestellten weiteren Stellmitteln verbindbar. Die Regelungseinheit 50 kann für eine drahtlose Kommunikation mit einer nicht dargestellten Fernlenkeinrichtung ausgebildet sein. Vorzugsweise ist eine bidirektionale Kommunikation zwischen der Regelungseinheit 50 und der Fernlenkeinrichtung vorgesehen. Dadurch können beispielsweise Steuerbefehle eines Bedieners von der Fernlenkeinrichtung an die Regelungseinheit 50 übermittelt werden. Ergänzend können Signale oder Daten, die von der Regelungseinheit 50 bereitgestellt werden, an die Fernlenkeinrichtung übertragen werden. Diese Signale oder Daten können beispielsweise von den Hall-Sensoren 45, 46, 47 oder von anderen, nicht näher dargestellten Sensoren wie Magnetfeldsensoren für das Erdmagnetfeld und/oder Beschleunigungssensoren und/oder Drehratensensoren und/oder Geschwindigkeitssensoren und/oder Umweltsensoren, die Messwerte wie Temperatur oder Luftdruck ermitteln, bereitgestellt werden. Derartige Informationen sind beispielsweise von Bedeutung, wenn die Schlagflügeleinrichtung 1 für ein künstliches Fluggerät eingesetzt werden soll. Hierbei ist es vorteilhaft, insbesondere wenn ein teilweise oder vollständig autonomes Fliegen des Fluggeräts angestrebt wird, möglichst viele Informationen über die Fluglage und die Umgebungsbedingungen zu kennen, um daraus beispielsweise eine Optimierung der Verschwenkung der Stützelemente 25, 37, 38 und/oder der Schlagfrequenz der Schlagflügel 4 vornehmen zu können.

Bei einer nicht näher dargestellten Ausführungsform der Erfindung ist die Antriebseinrichtung auch in einer generatorischen Betriebsweise betreibbar oder ausschließlich als Generator ausgeführt, so dass von außen auf die Schlagflügelanordnung einwirkende Massenströme eines Fluids, beispielsweise von Luft, Dampf oder Wasser in besonders effektiver Weise in elektrische Energie umgesetzt werden können.

## Patentansprüche

1. Schlagflügeleinrichtung mit einem Grundkörper (2), einer Antriebseinrichtung (3) und einem Schlagflügel (4), wobei der Schlagflügel (4) einen ersten und einen zweiten Flügelabschnitt (8, 9) sowie eine Gelenkeinrichtung (42) zwischen dem ersten und dem zweiten Flügelabschnitt (8, 9) umfasst, wobei der erste Flügelabschnitt (8) ein Gelenkmittel (7) für eine schwenkbewegliche Lagerung am Grundkörper (2) aufweist und wobei die Antriebseinrichtung (3) für die Einleitung einer Relativbewegung zwischen Grundkörper (2) und Schlagflügel (4) ausgebildet ist, wobei eine Gelenkachse des Gelenkmittels (7) und eine Schwenkachse der Gelenkeinrichtung (42) zumindest nahezu parallel zueinander ausgerichtet sind, wobei der erste Flügelabschnitt (8) eine formstabile erste Tragstrebe (11) umfasst, die benachbart zu einer ersten Erstreckungsachse (28) angeordnet ist, die sich zwischen dem Gelenkmittel (7) und der Gelenkeinrichtung (42) erstreckt und an der quer zur Erstreckungsachse (28) ausgerichtete Stützelemente (25) angeordnet sind, wobei der zweite Flügelabschnitt (9) eine formstabile zweite Tragstrebe (12) umfasst, die ausgehend von der Gelenkeinrichtung (42) längs einer zweiten Erstreckungsachse (34) ausgebildet ist und an der quer zur zweiten Erstreckungsachse (34) ausgerichtete Stützelemente (25) angeordnet sind, wobei die Stützelemente (25) schwenkbeweglich an der Tragstrebe (11, 12) angeordnet sind, **dadurch gekennzeichnet, dass** dem ersten und/oder dem zweiten Flügelabschnitt (8, 9) ein Stellmittel (33) für eine Einleitung einer Schwenkbewegung der Stützelemente (25, 38) um eine konzentrisch zur Tragstrebe (11, 12) angeordnete Schwenkachse (28, 34) relativ zur Tragstrebe (11, 12) zugeordnet ist.

2. Schlagflügeleinrichtung nach Anspruch 1, **dadurch gekennzeichnet, dass** die Tragstrebe (11) parallel zur ersten Erstreckungsachse (28) angeordnet ist.

3. Schlagflügeleinrichtung nach Anspruch 1, **dadurch gekennzeichnet, dass** das Stellmittel (33) für eine Einleitung einer Schwenkbewegung auf wenigstens ein Stützelement (25, 37, 38) ausgebildet ist, das an einem der Gelenkeinrichtung (42) abgewandten Endbereich des zweiten Flügelabschnitts (9) angeordnet ist.

4. Schlagflügeleinrichtung nach Anspruch 1, **dadurch gekennzeichnet, dass** der erste Fügelabschnitt (8) eine Steuerstrebe (18) umfasst, die relativbeweglich mit der ersten Tragstrebe (11) gekoppelt ist.

5. Schlagflügeleinrichtung nach Anspruch 4, **dadurch gekennzeichnet, dass** die Steuerstrebe (18) parallel zur Tragstrebe (11) des ersten Flügelabschnitts (8) verläuft.

6. Schlagflügeleinrichtung nach Anspruch 4, **dadurch gekennzeichnet, dass** die Gelenkeinrichtung (42) zwischen dem ersten und dem zweiten Flügelabschnitt (8, 9) mehrere, räumlich verteilt angeordnete Schwenkgelenke umfasst, die an einander benachbarten Endbereichen der ersten Tragstrebe (11), der Steuerstrebe (18) und der zweiten Tragstrebe (12) ausgebildet sind.

7. Schlagflügeleinrichtung nach Anspruch 6, **dadurch gekennzeichnet, dass** die Gelenkeinrichtung (42) als Gelenkviereck, insbesondere als Drachenviereck, ausgebildet ist und einen an der zweiten Tragstrebe (12) festgelegten Gelenkhebel (16) umfasst, der an der Steuerstrebe (18) schwenkbeweglich gelagert und über einen Lenkhebel (15) mit der ersten Tragstrebe schwenkbeweglich gekoppelt ist.

8. Schlagflügeleinrichtung nach Anspruch 7, **dadurch gekennzeichnet, dass** zwischen dem Schwenkgelenk der ersten Tragstrebe (11) und dem Schwenkgelenk der Steuerstrebe (18) ein Lenkhebel (19) angeordnet ist.

9. Schlagflügeleinrichtung nach Anspruch 8, **dadurch gekennzeichnet, dass** die erste Tragstrebe (11) und die Steuerstrebe (18) jeweils an einem der Gelenkeinrichtung (42) abgewandten Endbereich mittels eines Lenkhebels (20) schwenkbeweglich miteinander gekoppelt sind.

10. Schlagflügeleinrichtung nach Anspruch 9, **dadurch gekennzeichnet, dass** die Antriebseinrichtung (3) einen Drehantrieb (24) umfasst, der für eine Einleitung einer Drehbewegung auf eine Kurbel (22) ausgebildet ist, die mit dem Lenkhebel (20) bewegungsgekoppelt ist, der zwischen der ersten Tragstrebe (11) und der Steuerstrebe (18) angeordnet ist.

11. Schlagflügeleinrichtung nach Anspruch 10, **dadurch gekennzeichnet, dass** ein Kurbelzapfen (21) zur beweglichen Verbindung der Kurbel (22) mit dem Lenkhebel (20), der zwischen der ersten Tragstrebe (11) und der Steuerstrebe (18) angeordnet ist, auf einer Kreisbahn bewegbar ist und für eine Bereitstellung von zueinander senkrecht ausgerichteten Bewegungskomponenten für eine Schlagbewegung des ersten und zweiten Flügelabschnitts (8, 9) sowie für eine Abwinklung des zweiten Flügelabschnitts (9) gegenüber dem ersten Flügelabschnitt (8) ausgebildet ist.

12. Schlagflügeleinrichtung nach einem der Ansprüche 3 bis 11, **dadurch gekennzeichnet, dass** zwischen der Tragstrebe (11, 12) und den Stützelementen (25) eine Rückstellfeder (30) ausgebildet ist.

13. Schlagflügeleinrichtung nach einem der Ansprüche 3 bis 12, **dadurch gekennzeichnet, dass** einander benachbarte Stützelemente (25) am ersten und/oder am zweiten Flügelabschnitt (8, 9) über, vorzugsweise elastisch ausgebildete, Verbindungsmittel (29) miteinander bewegungsgekoppelt sind.

14. Schlagflügeleinrichtung nach einem der vorhergehenden Ansprüche, **dadurch gekennzeichnet, dass** das Gelenkmittel (7) an der Tragstrebe (11) des ersten Flügelabschnitts (8) angeordnet ist.

15. Verfahren zum Betreiben einer Schlagflügeleinrichtung mit den Schritten: Erfassen einer räumlichen Lage eines Schlagflügels (4) gegenüber einem Grundkörper (2), Einleiten einer Schwenkbewegung auf wenigstens ein schwenkbeweglich an einer Tragstrebe (11, 12) gelagertes Stützelement (25, 37, 38), wobei die Schwenkbewegung um eine konzentrisch zur Tragstrebe (11, 12) angeordnete Schwenkachse (28, 34) vorgenommen wird, in Abhängigkeit von der ermittelten räumlichen Lage des Schlagflügels (4), um eine Verwindung des Schlagflügels (4) zu erzielen.

## Claims

1. Flapping wing device comprising a base body (2), a drive device (3) and a flapping wing (4), wherein the flapping wing (4) comprises a first and a second wing section (8, 9) and an articulation device (42) between the first and the second wing section (8, 9), wherein the first wing section (8) has an articulation means (7) for a pivotable mounting on the base body (2) and wherein the drive device (3) is designed for introducing a relative movement between the base body (2) and the flapping wing (4), wherein an articulation axis of the articulation means (7) and a pivot axis of the articulation device (42) are oriented at least almost parallel to each other, wherein the first wing section (8) comprises a dimensionally stable first support strut (11) located adjacent to a first extension axis (28), which extends between the articulation means (7) and the articulation device (42) and on which support elements (25) oriented at right angles to the extension axis (28) are arranged, wherein the second wing section (9) comprises a dimensionally stable second support strut (12), which, starting from the articulation device (42), is formed along a second extension axis (34) and on which support elements (25) oriented at right angles to the second extension axis (34) are arranged, the support elements (25) being pivotably mounted on the support strut (11, 12), **characterised in that** the first and/or the second wing section (8, 9) is/are assigned an actuating means (33) for introducing a pivoting movement of the support elements (25, 38) relative to the support strut (11, 12) about a pivot axis (28, 34) concentric with the support strut (11, 12).

2. Flapping wing device according to claim 1, **characterised in that** the support strut (11) is arranged parallel to the first extension axis (28).

3. Flapping wing device according to claim 1, **characterised in that** the actuating means (33) is designed for introducing a pivoting movement into at least one support element (25, 37, 38) located in an end region of the second wing section (9) which is remote from the articulation device (42).

4. Flapping wing device according to claim 1, **characterised in that** the first wing section (8) comprises a control strut (18), which is coupled to the first support strut (11) in a manner capable of relative movement.

5. Flapping wing device according to claim 4, **characterised in that** the control strut (18) extends parallel to the support strut (11) of the first wing section (8).

6. Flapping wing device according to claim 4, **characterised in that** the articulation device (42) comprises between the first and the second wing section (8, 9) a plurality of swivel joints arranged in spatial distribution, which are formed in mutually adjacent end regions of the first support strut (11), the control strut (18) and the second support strut (12).

7. Flapping wing device according to claim 6, **characterised in that** the articulation device (42) is designed as an articulation rectangle, in particular a kite rectangle, and comprises a toggle lever (16), which is secured to the second support strut (12), is pivotably mounted on the control strut (18) and coupled to the first support strut via a steering lever (15).

8. Flapping wing device according to claim 7, **characterised in that** a steering lever (19) is arranged between the swivel joint of the first support strut (11) and the swivel joint of the control strut (18).

9. Flapping wing device according to claim 8, **characterised in that** the first support strut (11) and the control strut (18) are in each case coupled to one another in an end region remote from the articulation device (42) by means of a steering lever (20).

10. Flapping wing device according to claim 9, **characterised in that** the drive device (3) comprises a rotary drive (24), which is designed for introducing a rotary movement into a crank (22) motion-coupled to the steering lever (20) located between the first support strut (11) and the control strut (18).

11. Flapping wing device according to claim 10, **characterised in that** a crank pin (21) for the movable connection of the crank (22) to the steering lever (20) located between the first support strut (11) and the control strut (18) is movable on a circular track and designed for a provision of movement components oriented perpendicularly to one another for a flapping movement of the first and the second wing section (8, 9) and for an offsetting of the second wing section (9) relative to the first wing section (8).

12. Flapping wing device according to any of claims 3 to 11, **characterised in that** a return spring (30) is formed between the support strut (11, 12) and the support elements (25).

13. Flapping wing device according to any of claims 3 to 12, **characterised in that** mutually adjacent support elements (25) on the first and/or the second wing section (8, 9) are motion-coupled to one another by connecting means (29), which are preferably elastic.

14. Flapping wing device according to any of the preceding claims, **characterised in that** the articulation means (7) is located on the support strut (11) of the first wing section (8).

15. Method for operating a flapping wing device, comprising the steps of: the detection of a spatial position of a flapping wing (4) relative to a base body (2), the introduction of a pivoting movement into at least one support element (25, 37, 38) pivotably mounted on a support strut (11, 12), the pivoting movement being performed about a pivot axis (28, 34) concentric with the strut (11, 12), as a function of the detected spatial position of the flapping wing (4), in order to obtain a twist of the flapping wing (4).

## Revendications

1. Dispositif à aile battante avec un corps de base (2), un dispositif d'entraînement (3) et une aile battante (4), dans lequel l'aile battante (4) comporte une première et une seconde section d'aile (8, 9) ainsi qu'un dispositif d'articulation (42) entre la première et la seconde section d'aile (8, 9), dans lequel la première section d'aile (8) présente un moyen d'articulation (7) pour un logement mobile en pivotement sur le corps de base (2) et dans lequel le dispositif d'entraînement (3) est réalisé pour l'introduction d'un mouvement relatif entre le corps de base (2) et l'aile battante (4), dans lequel un axe d'articulation du moyen d'articulation (7) et un axe de pivotement du dispositif d'articulation (42) sont orientés au moins presque parallèlement l'un à l'autre, dans lequel la première section d'aile (8) comporte une première entretoise porteuse (11) indéformable qui est agencée de manière contiguë à un premier axe d'extension (28) qui s'étend entre le moyen d'articulation (7) et le dispositif d'articulation (42) et sur lequel des éléments d'appui (25) orientés transversalement à l'axe d'extension (28) sont agencés, dans lequel la seconde section d'aile (9) comporte une seconde entretoise porteuse (12) indéformable qui est réalisée à partir du dispositif d'articulation (42) le long d'un second axe d'extension (34) et sur laquelle des éléments d'appui (25) orientés transversalement au second axe d'extension (34) sont agencés, dans lequel les éléments d'appui (25) sont agencés de manière mobile en pivotement sur l'entretoise porteuse (11, 12), **caractérisé en ce qu'**un moyen de réglage (33) pour une introduction d'un mouvement pivotant des éléments d'appui (25, 38) autour d'un axe de pivotement (28, 34) agencé concentriquement à l'entretoise porteuse (11, 12) par rapport à l'entretoise porteuse (11, 12) est associé à la première et/ou à la seconde section d'aile (8, 9).

2. Dispositif à aile battante selon la revendication 1, **caractérisé en ce que** l'entretoise porteuse (11) est agencée parallèlement au premier axe d'extension (28).

3. Dispositif à aile battante selon la revendication 1, **caractérisé en ce que** le moyen de réglage (33) pour une introduction d'un mouvement de pivotement est réalisé sur au moins un élément d'appui (25, 37, 38) qui est agencé sur une zone d'extrémité éloignée du dispositif d'articulation (42) de la seconde section d'aile (9).

4. Dispositif à aile battante selon la revendication 1, **caractérisé en ce que** la première section d'aile (8) comporte une entretoise de commande (18) qui est couplée par mouvement relatif à la première entretoise porteuse (11).

5. Dispositif à aile battante selon la revendication 4, **caractérisé en ce que** l'entretoise de commande (18) s'étend parallèlement à l'entretoise porteuse (11) de la première section d'aile (8).

6. Dispositif à aile battante selon la revendication 4, **caractérisé en ce que** le dispositif d'articulation (42) comporte entre la première et la seconde section d'aile (8, 9) plusieurs articulations pivotantes agencées par répartition spatiale qui sont réalisées sur des zones d'extrémité contiguës les unes aux autres de la première entretoise porteuse (11), de l'entretoise de commande (18) et de la seconde entretoise porteuse (12).

7. Dispositif à aile battante selon la revendication 6, **caractérisé en ce que** le dispositif d'articulation (42) est réalisé comme un quadrilatère articulé, en particulier comme un quadrilatère en cerf-volant et comporte un levier d'articulation (16) fixé sur la seconde entretoise porteuse (12) qui est logé de manière mobile en pivotement sur l'entretoise de commande (18) et est couplé de manière mobile en pivotement par un levier de direction (15) à la première entretoise porteuse.

8. Dispositif à aile battante selon la revendication 7, **caractérisé en ce qu'**un levier de direction (19) est agencé entre l'articulation pivotante de la première entretoise porteuse (11) et l'articulation pivotante de l'entretoise de commande (18).

9. Dispositif à aile battante selon la revendication 8, **caractérisé en ce que** la première entretoise porteuse (11) et l'entretoise de commande (18) sont couplées l'une à l'autre respectivement sur une zone d'extrémité éloignée du dispositif d'articulation (42) à l'aide d'un levier de direction (20) de manière mobile en pivotement.

10. Dispositif à aile battante selon la revendication 9, **caractérisé en ce que** le dispositif d'entraînement (3) comporte un entraînement rotatif (24) qui est réalisé pour une introduction d'un mouvement rotatif sur une manivelle (22) qui est couplée en mouvement avec le levier de direction (20) qui est agencé entre la première entretoise porteuse (11) et l'entretoise de commande (18).

11. Dispositif à aile battante selon la revendication 10, **caractérisé en ce qu'**un maneton (21) est mobile pour la liaison mobile de la manivelle (22) avec le levier de direction (20) qui est agencé entre la première entretoise porteuse (11) et l'entretoise de commande (18), sur une trajectoire circulaire et est réalisé pour une mise à disposition de composantes de mouvement orientées perpendiculairement l'une à l'autre pour un mouvement battant de la première et seconde section d'aile (8, 9) ainsi que pour un coudage de la seconde section d'aile (9) par rapport à la première section d'aile (8).

12. Dispositif à aile battante selon l'une des revendications 3 à 11, **caractérisé en ce qu'**un ressort de rappel (30) est réalisé entre l'entretoise porteuse (11, 12) et les éléments d'appui (25).

13. Dispositif à aile battante selon l'une des revendications 3 à 12, **caractérisé en ce que** des éléments d'appui (25) contigus l'un à l'autre sont couplés en mouvement l'un à l'autre sur la première et/ou seconde section d'aile (8, 9) par des moyens de raccordement (29) réalisés de préférence élastiquement.

14. Dispositif à aile battante selon l'une des revendications précédentes, **caractérisé en ce que** le moyen d'articulation (7) est agencé sur l'entretoise porteuse (11) de la première section d'aile (8).

15. Procédé de fonctionnement d'un dispositif à aile battante avec les étapes : détection d'une position spatiale d'une aile battante (4) par rapport à un corps de base (2), introduction d'un mouvement de pivotement sur au moins un élément d'appui (25, 37, 38) logé de manière mobile en pivotement sur une entretoise porteuse (11, 12), dans lequel le mouvement de pivotement est entrepris autour d'un axe de pivotement (28, 34) agencé concentriquement à l'entretoise porteuse (11, 12), en fonction de la position spatiale déterminée de l'aile battante (4) afin d'obtenir une torsion de l'aile battante (4).
